# EUROPEAN PATENT SPECIFICATION

(11) **EP 2 407 849 B1**
(45) Date of publication and mention of the grant of the patent: **30.01.2013**
(21) Application number: 11075167.4
(22) Date of filing: 11.07.2011
(51) Int. Cl.: G05D 23/13

(54) **Thermostatic mixing valve**
Thermostatisches Mischventil
Mitigeur thermostatique

(30) Priority: 15.07.2010 IT MI20101306
(43) Date of publication of application: 18.01.2012
(73) Proprietor: Caleffi S.p.A., 28010 Fontaneto d'Agogna, Novara (IT)
(72) Inventor: Caleffi, Marco, 28010 Fontaneto d'Agogna (IT)
(74) Representative: Coloberti, Luigi

(56) References cited:
- WO-A1-00/14615
- DE-A1- 19 610 778
- FR-A1- 2 888 911
- FR-A3- 2 834 543

## Description

### BACKGROUND OF THE INVENTION

The present invention relates to a thermostatic mixing valve for fluids, such as cold water and hot water, normally used for adjusting the temperature of sanitary water supplied to one or more users, maintaining the temperature of the mixed water at a predetermined constant value.

In systems for delivering hot and cold water for sanitary use, for example in hospitals, nursing homes and schools, the need exists of ensuring and maintaining the temperature of the mixed water supplied to different users, at a substantially constant value in order to prevent the risk of burns for the more vulnerable subjects.

Normally, thermostatic mixing valves are used that must be capable of precisely adjusting, at a substantially constant value, the temperature of the mixed water supplied to different users, at the change of temperature and pressure both of the cold and hot water at the inlet side, and/or at the change of the flow rate of mixed water supplied to the different users. Thermostatic mixing valves of the type mentioned above must also accomplish a function of anti-burn safety, by rapidly stopping the flow of the hot water when the flow of cold water accidentally fails.

Thermostatic mixing valves of this type are known for example from FR-A-2834543 of the same applicant, from US-A-20080257969 and FR-A-2888911. In particular FR-A-2834543 discloses a thermostatic mixing valve of the type comprising a hollow valve body having a movable flow regulator for controlling the mixing of cold and hot water, in which the flow regulator is consisting of a piston member operatively connected to a thermostatic actuator that operates to move the piston member between axially spaced apart seats at a first fluid inlet for the cold water and at a second fluid inlet for the hot water respectively, and a flow path for the mixed water, that coaxially extends to the thermostatic actuator towards a mixed water outlet.

The piston member for controlling the fluid flow comprises a peripheral cylindrical wall, an intermediate partition wall, and a plurality of radial fins and a set of through holes for partitioning the inlet flow of cold water, wherein the single streams of cold water are premixed with the inlet flow of hot water, and wherein the mixed water, downstream the piston member, is caused to flow along a tubular conveyor enclosing the thermally sensitive probe of the thermostatic actuator; a biasing spring operates for opposing the movement of the piston member caused by the thermostatic actuator, to adjust the working position of the piston member for controlling the cold and hot water flows.

According to FR-A-2834543, the flow conveyor comprises enlarged rear portion conformed to dump the whirling condition of the pre-mixed water, allowing the dumped mixed water to flow along an annular path of smaller cross-sectional area, between the thermally sensitive probe of the thermostatic actuator and the fore tubular portion of the same flow conveyor.

However, upstream the conveyor different mixing conditions can occur between the hot water at the second inlet, and the streams of cold water outcoming from the set of holes in the partition wall of the piston member; consequently, not homogeneous temperature condition of the mixed water flowing along and in contact with the probe of the thermostatic actuator could cause uncontrolled conditions for the mixed water at the outlet of the mixing valve.

From FR-A-2888911 it is also known a thermostatic mixing valve of the type previously referred to, in which radial fins are longitudinally extending for the entire length of the tubular portion of the flow conveyor, to define restricted flow paths causing an increasing of the flow velocity to maintain whirling conditions in the mixed water flow.

From tests attained with thermostatic mixers of this types, it was further noticed that as the conditions of temperature and pressure of the cold and/or hot water change, as well as the water flow rate drawn by the users connected to a same distributing net changes, the temperature of the mixed water has the tendency to change within certain ranges considered too high, being in any case a cause of failure for the mixing valve.

Actually, since the piston member for controlling the flows of water, besides the action of the thermostatic actuator, is also subjected to biasing springs having different elastic properties, said piston may be subjected to continuous reciprocations which may start to resonate, with consequent temperature variations of the mixed water flow. Consequently, the conventional thermostatic mixing valves are not always capable of ensuring an optimal their own operation and a stability of the temperature of the mixed water, so that the operation and stability could substantially be independent from the variations of pressure and/or temperature of the hot water and the cold water at their inlets; thus, the efficiency and the working stability of the whole thermo-static mixing valve can result compromised.

### OBJECTS OF THE INVENTION

A main object of the present invention is to provide a thermostatic mixing valve for sanitary systems and similar applications, suitable for allowing a high control of the mixing degree by reducing, if not substantially removing, dangerous variations of temperature of the mixed water, as the pressure and the temperature conditions of the hot and cold water at the inlets change.

A further object of the invention is to provide a thermostatic mixing valve as defined above, wherein the phenomenon of the temperature oscillations and the resonating effect of the control piston are substantially removed.

### SUMMARY OF THE INVENTION

These and further objects and advantages of the invention are obtained by a thermostatic mixing valve according to claim 1.

More precisely, according to the invention, a thermostatic mixing valve has been provided, comprising:
a valve body having a first fluid inlet, a second fluid inlet axially spaced apart from the first fluid inlet, and a flow path having a mixed fluid outlet;
a flow regulator arranged in the valve body for a movement between seatings at the first and the second fluid inlets in response to expansions and contractions of a thermostatic actuator operatively connected to the flow regulator, said thermostatic actuator axially extending into a flow conveyor along the flow path, between a pre-mixing chamber downstream the flow regulator and the mixed fluid outlet;
the flow conveyor comprising an enlarged annular wall at the rear end, a fore tubular portion axially extending along said thermostatic actuator;
characterised in that the flow conveyor comprises:
a plurality of angularly spaced apart and arch-shaped internal wings to provide a first set of parallely arranged flow paths having lobed apertures and extending from a rear peripheral wall to a first length of the fore tubular portion of the conveyor said first set of flow paths as a whole, having a first constant cross-sectional area; and
a second flow path extending for the remaining length of the tubular portion of the flow conveyor, downstream the internal wings, said second flow path being conformed with a cross-sectional area greater than the cross-sectional area of the first set of flow paths, to provide a laminar flow, a reduction of the velocity and a prolonged contact time of the mixed fluid with the thermostatic actuator towards the fluid outlet.

### BRIEF DESCRIPTION OF DRAWINGS

These and further features and advantages of the thermostatic mixing valve according to the invention, as well as some preferred embodiments, will better result from the following description and the enclosed drawings, wherein:
Figure 1 is a longitudinal cross-sectional view of a thermostatic mixing valve according to the invention;
Figure 2 is a top view of the piston member of the flow regulator;
Figure 3 is a cross sectional-view according to line 3-3 of figure 2;
Figure 4 is a top view of a first embodiment of the flow conveyor;
Figure 5 is a cross-sectional view according to line 5-5 of figure 4;
Figure 6 is a top view of the piston member, with a portion removed, and the underlying flow conveyor;
Figure 7 is an enlarged detail of figure 1;
Figure 8 is a diagram of the temperature of the mixed water, in different operative conditions of a conventional mixing valve;
Figure 9 is a diagram of the temperature of the mixed water, in different operative conditions of the mixing valve according to the invention;
Figure 10 is a top view of a second embodiment of the conveyor according to the invention;
Figure 11 is a top view of a third embodiment of the conveyor according to the invention.

### DETAILED DESCRIPTION OF THE INVENTION

The thermostatic mixing valve according to the invention comprises a hollow body 10 having a first fluid inlet 11 for the cold water, and a second fluid inlet 12 for the hot water, which inlets 11, 12 both open at opposite and axially spaced apart positions of a chamber 13 for a flow regulator consisting of a hollow piston 14 for controlling the flow of water at both inlets 11 and 12; the piston chamber 13, at the side of the second inlet 12 for the flow of hot water, communicates in turn with a pre-mixing chamber and an outlet 15 for the mixed water.

The piston 14 for controlling the water flows is axially movable in the piston chamber 13 and is guided by an annular seat 16, provided with a sealing ring 17, in an intermediate position between an upper sealing seat 18' for the cold water and a lower sealing seat 19 for the hot water, as shown.

The mixing valve further comprises a thermostatic actuator 20, axially extensible, as known per se, for example of the wax type, the slidable rod of said thermostatic actuator 20 being operatively connected to a central hub 14A of the piston 14; the thermostatic actuator 20 exhibits a thermosensitive probe 20A that extends inside a conveyor 21 for the flow of mixed water, coaxially arranged into the outlet duct 15. The conveyor 21, on the side facing the piston chamber 13, is provided with a plurality of arch-shaped internal fins 22 to support the thermostatic actuator 20 urged against the hub 14A by a biasing spring 23 arranged into the annular space between the outlet 15 and the conveyor 21.

The thermostatic actuator 20 comprises a neck 20B that extends inside to the piston 14, from which neck 20B the end of a slidable rod 24 of the actuator 20 protrudes to bear against an adjustable stop member 25.

The position of the stop member 25 may be axially adjusted to set a desired value of the temperature of the mixed water; consequently, said stop member 25 is axially guided within the stem 26 of a control knob 27, and is subject to the biasing of a second spring 28 having an elastic load greater than the first biasing spring 23. Thus, by acting on the control knob 27, the relative position of the stop member 25 and, consequently, the position of the piston 14 for setting the temperature T of the mixed water can be changed.

The piston 14 for controlling the water flows is preferably made of temperature resistant synthetic plastic material and is arranged in the valve body 10 for a movement between seatings at the first and second fluid inlets 11, 12, to adjust the mixing ratio between the cold water and hot water fed to the mixer, in order to maintain at a prefixed constant value the temperature of the mixed water at the outlet 15, both as the temperatures of the cold and/or hot water at the inlets change, and as the pressures and/or the flow rates.

According to the present invention, a proper mixing and temperature control of the mixed water are obtained by the combination and arrangement of the piston 14 for controlling the water flows, and conformation of the conveyor 21 for the mixed water.

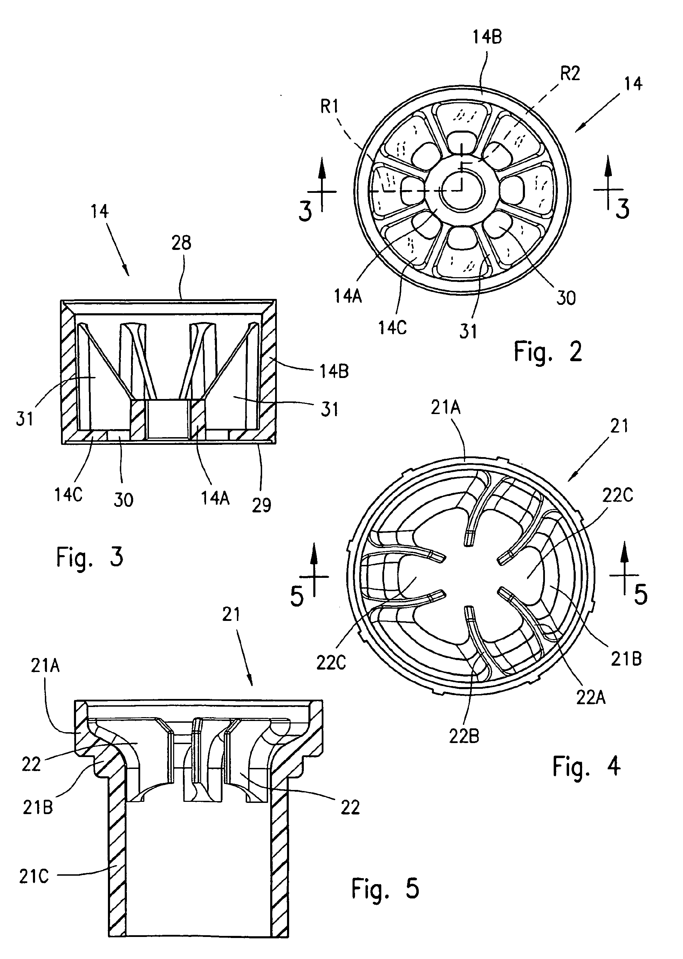

A preferred embodiment of the piston 14 for controlling the flows of cold and hot waters is shown in figures 2 and 3. The piston 14 comprises a peripheral wall 14B, at the rear side, provided with an upper edge 28 for tightly closing against a sealing seat 18' of a plug 18 at the first inlet 11, and a lower edge 29 for tightly closing against an annular shoulder or lower sealing seat 19 of the body 10 at the second fluid inlet 12 of the mixing valve.

The piston 14 further comprises a bottom wall 14C, or, more in general, a partitioning wall provided with a set of through holes 30 for the passage of the cold water supplied at the first inlet 11.

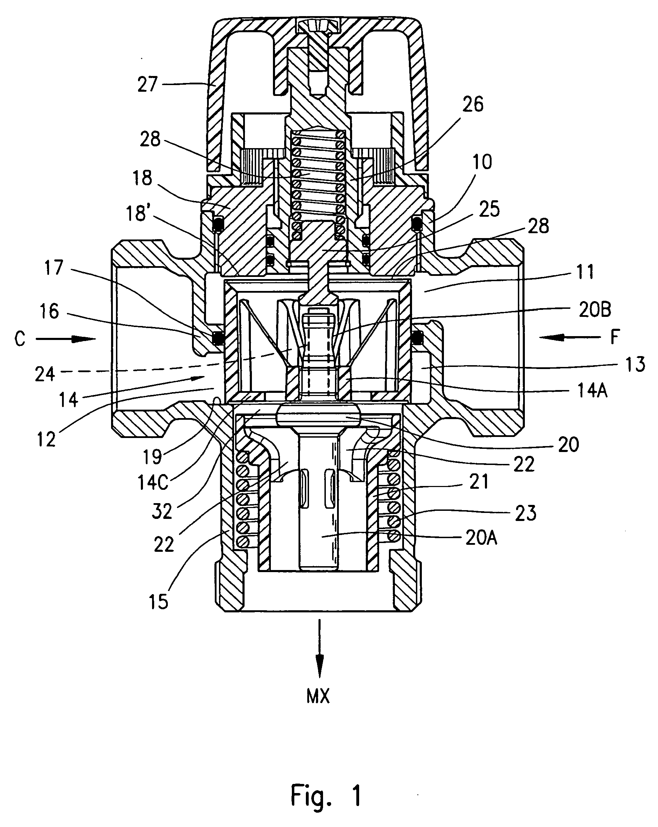

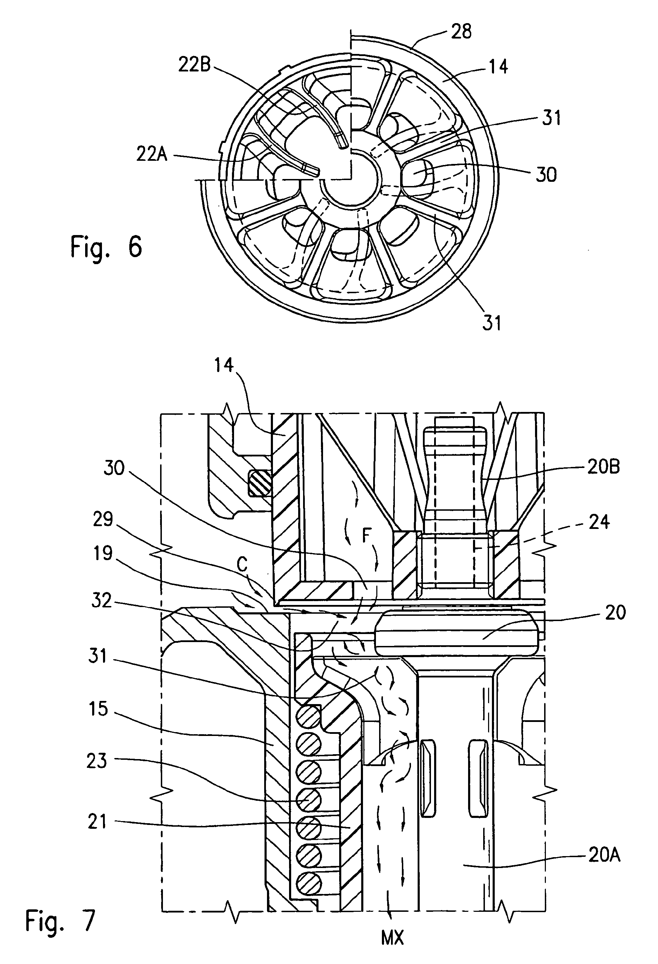

In particular, from figures 2 and 3 it will seen that the piston 14 is partitioned into eight sectors by a plurality of triangular internal fins 31 that radially extend from the peripheral wall 14B taping towards the central hub 14A. The fins 31 axially extend within the piston 14 from a position underlying the upper edge 28 to the bottom wall 14C so that, in the assembled condition of figure 1, the inlet flow of cold water is partitioned by the fins 31 into a plurality of partial streams to exit from the single holes 30 and to pre-mix with the inlet hot water in a first mixing chamber 32 shown in fig. 7.

Useful results have been obtained when certain dimensional ratios are maintained between the radial positions of the holes 30, with respect to the radial position of the peripheral wall 14B of the piston 14, as well as between the area of each single holes 30 and the area of a respective sector for partitioning the inlet flow of cold water, which sectors are delimited by the radial fins 31.

If the radius of the cylindrical internal surface of the peripheral wall 14B of the piston 14 is indicated by R1, and the radius of a circle whereon the centres of the holes 30 lie is indicated by R2, as well as if the area, in a cross plane, of each sector into which the fins 31 partition the hollow piston 14, is indicated by AS, and the area of the holes 30 is indicated by AF, convenient results have been obtained for mixing valve of 1/2", 3/4" and 1" size, by partitioning the piston 14 in eight sectors, maintaining a suitable ratio R1/R2 ranging between 1,30 and 1,60, and a ratio AS/AF ranging between 3 and 3,5.

Figures 4 and 5 show a first embodiment of the flow conveyor 21 conformed to provide a whirling and an additional mixing at the rear side, and a laminar flow, a reduction of the velocity and a prolonged contact time with the thermostatic actuator of the mixed water flowing to the outlet at the fore side. The turbulence or whirling of the pre-mixed water is obtained by arch shaped wings 22 defining a first set of parallely arranged flow paths, having lobed apertures and a constant cross-sectional area for the passage of the mixed water flows, in which the set of flow paths and lobed conformation result from rounded contour of internal surfaces, in combination with the arch-shaped conformation, the number and the arrangement of the internal wings 22, in relation to the different number and arrangement of the partitioning fins 31 and holes 30 of the flow control piston 14.

According to the example of figures 4 and 5, the conveyor 21 is conformed for generating, in the rear side of the same conveyor 21, a strong whirling action and turbulence of the water flow coming from the pre-mixing chamber 32 (figure 1) provided between the bottom wall 14C of the piston 14 and the rear side of the conveyor 21.

In particular, the conveyor 21 comprises an upper portion 21A of larger diameter, substantially corresponding to the diameter of the control piston 14, connected to a fore tubular portion 21C by an intermediate portion 21 B having a shaped internal surface that, together with the arch-shaped wings 22 for deflecting the water streams, co-operates in forming a plurality of parallely arranged paths having lobed apertures 22C for the passage of the mixed water, in which the arch shaped wings 22 and lobed apertures 22C are suitable for generating a state of turbulence and a further mixing effect.

For the present disclosure, "lobed aperture" means an aperture delimited by rounded surfaces so as to define a warped profile converging both towards the central axis and into the longitudinal direction of the conveyor.

According to the example under consideration of figure 4, the conveyor 21 is conformed with three pairs of arch-shaped wings 22A and 22B, suitable to generate a state of turbulence and a deviation of the pre-mixed water owing to the arch conformation of said wings 22A and 22B, which are converging from the peripheral wall of the conveyor, towards the central axis; the wings 22 further extend axially from a rear peripheral walls 21A along the middle portion 21 B, and into a first length of the tubular portion 21 C, the remaining length of the conveyor 21 being provided by a cylindrical wall.

In the case shown, the conveyor 21 comprises three pairs of facing wings, curved in mutually opposite directions, in which the fins 22A and 22B of all the pairs of fins are each other angularly spaced apart at the peripheral wall of the conveyor by about 60°, whereas the axes of symmetry S of adjacent pairs of wings are angularly spaced apart by 120°.

Figure 6 shows a further feature of the thermostatic mixing valve according to the present invention; as previously stated, the hollow piston 14 for controlling the water flows is partitioned into eight sectors by the internal fins 22, each of said sectors exhibiting a hole 30 for the passage of the water; conversely, the conveyor 21 is partitioned by the wings 22 into a lower number of sectors, six sectors in the case shown. Thus, in the superimposed condition of figure 1, the sectors and the holes 30 of the piston 14 always result angularly misaligned with respect to the sectors of the conveyor 21, as shown in figure 6.

As previously disclosed, this particular conformation and arrangement of the piston 14 and the flow conveyor 21 enables a first whirling mixing effect of the already pre-mixed water, in which the mixing effect is consequent to a turbulence caused by the arch-shaped wings and lobed apertures of the first set of flow paths, and a better homogeneity of temperature of the mixed water flowing at the contact region with the probe 20A of the thermostatic actuator 20, along the conveyor 21; thus, the actuator is enabled to rapidly react to possible variations of temperatures, pressures and/or flow rates of the cold water and the hot water at the inlet side of the mixing valve, all that in order to maintain at a constant value, set by the same user, the temperature of the mixed water at the outlet side of the valve.

All disclosed above can be better understood with reference to figure 7, showing an enlarged detail of figure 1; consequently, in figure 7 the same reference numbers of figure 1 has been used in order to indicate similar or equivalent parts.

From figures 1 and 7, it is therefore noticed that the flow of cold water F at the fluid inlet 11 of the mixing valve is firstly circumferentially distributed across the narrow slit existing between the upper edge 28 of the piston 14 and the sealing seat 18', flowing into the hollow piston 14 at high speed. Said high speed is then remarkably reduced within the chamber of the piston 14, where the flow of cold water is partitioned, flowing out trough the holes 30 at the bottom wall 14C, towards the underlying pre-mixing chamber 32 existing between the piston 14 and the conveyor 21.

Inside the pre-mixing chamber 32, the streams of cold water exiting the single holes 30, impinge a flow of hot water supplied at the inlet 12 of the mixing valve, and flow into the pre-mixing chamber 32 in a substantially radial direction, at high speed, that is higher than the speed of the streams of cold water flowing out the holes 30, meshing with said streams of cold water with high kinetic energy and producing a pre-mixing condition inside said chamber 32.

Accordingly, as a consequence of the arch shaped conformation and arrangement of the internal wings 22, the shaped surface 21 B and the lobed apertures 22C of the conveyor 21, as well as a consequence of the different angular arrangement between sectors and holes of the piston 14 and the conveyor 21, the flow of pre-mixed water is subjected to a turbulence action and an end mixing on each of the flow paths between the wings 22 of the conveyor 21. Thus, a flow of mixed water having a laminar flow due to the enlarged cross-sectional area of the tubular portion 21C of the conveyor 21, is flowing at a reduced velocity and for a prolonged contact time along the thermostatic actuator and towards the outlet 15, said constant temperature being of value equal to the value set by the user acting by the control knob 27.

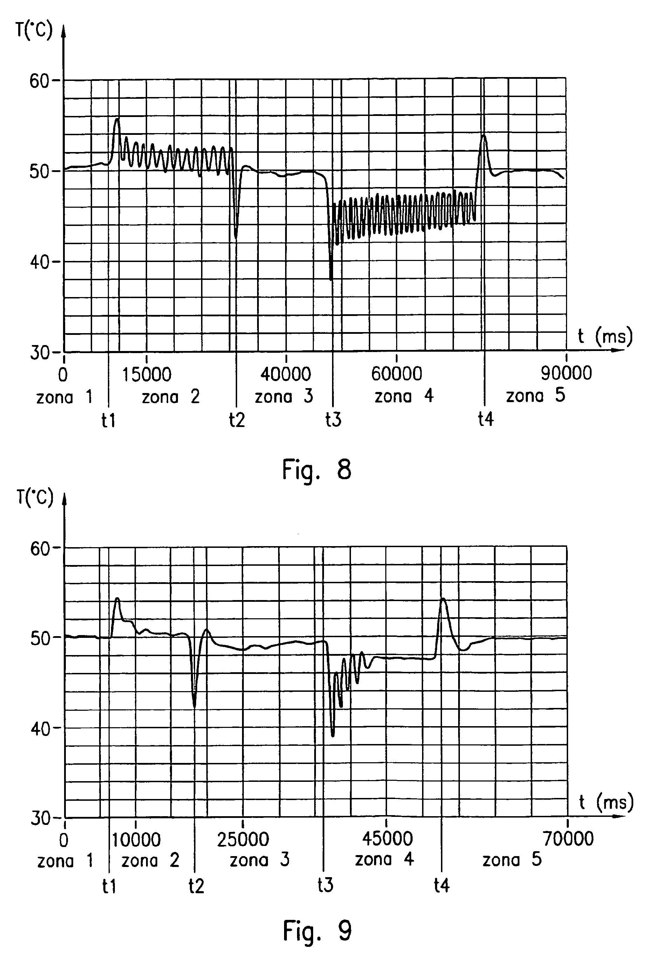

Comparative tests were attained between a conventional thermostatic mixer, for example of the type disclosed in FR-A-2834543, and a thermostatic mixer according to the present invention. The results were reported in the diagrams of figures 8 and 9, which are showing the variations of the temperature T in °C of the mixed water at the outlet of the mixer, as a function of the response times of the thermostatic actuator, expressed in thousandths of second, for five different working conditions.

The diagram of figure 8, illustrates the temperatures T of the mixed water at the outlet of a conventional thermostatic mixing valve subdivided into five regions, each of the five regions corresponding to a different working condition of the mixing valve.

In the region 1, up to the time t1, the temperature T of the mixed water was maintained at a substantially constant value of 50°C, equal to the value initially set for the mixing valve; the draw of the mixed water took place from a single point of a water system, downstream the mixing valve.

The drawing or pouring of mixed water being maintained constant for a time length; at the time t1 a drawing of cold water in a point upstream of the mixing valve was simulated, to reduce the pressure of said cold water at the inlet 11; for the full duration of the region 2, between the times t1 and t2, anomalous variations of the temperature of the mixed water were detected, potentially harmful for the user due to recurring and frequent fluctuations of temperature.

In the region 3, ranging between times t2 and t3, the initial conditions of the region 1 were restored, by stopping the withdrawal of cold water upstream the mixing valve; after a rapid negative peak, the temperature T of the mixed water returned to acceptable values, near the 50°C initially set.

In the next region 4, ranging between times t3 and t4, the withdrawal or pouring of hot water in a point upstream the mixing valve was again simulated, the drawing of mixed water downstream the mixing valve being maintained constant, said condition being so to cause the pressure of the hot water at the inlet 12 to be changed. In these conditions, after a deep negative peak, large fluctuations of the temperature T of the mixed water at the outlet of the mixing valve were again observed.

After the time t4, during the region 5, the initial conditions were again restored, observing that the temperature of the mixed water returned to acceptable values around 50°C.

Consequently, the working of the mixing valve resulted appropriate in the regions 1, 3 and 5, whereas resulted inappropriate in the regions 2 and 4.

The diagram of figure 9, was again subdivided into five regions, each region relating to a different working condition, i.e. so as to propose again the previous working conditions.

In the region 1, up to the time t1, the temperature of the mixed water remained at a substantially constant value of 50°C, as shown, as the drawing of mixed water occurred only at a single point of a hydraulic system, downstream of the mixing valve.

In the region 2, ranging between times t1 and t2, the drawing of cold water upstream of the mixing valve was again simulated, so as to change the pressure of the cold water at the inlet 11. In this step, after a rapid initial peak, for a few hundredths of second, during the whole region 2 no anomalies or large temperature fluctuations of the mixed water were observed, whose average temperature remained just a little higher than the 50C° initially set.

In the region 3, ranging between the times t2 and t3, the initial conditions were restored, by stopping the drawing of cold water upstream of the mixing valve. After a short negative peak, the temperature of the mixed water rapidly returned to acceptable values, remaining close and a little smaller than 50°C.

In the region 4, ranging between the times t3 and t4, as the drawing of mixed water downstream the mixing valve was maintained still constant, the upstream drawing of hot water was simulated, i.e. a condition that changed the pressure at the inlet 12 of the mixing valve.

In this step, except for a short variation of the initial temperature, no large repeated fluctuations and anomalous variations of the temperature of the mixed water were observed, the average value stabilized again at a value near the 50°C throughout the withdrawal or pouring out of hot water upstream of the mixing valve.

In the next region 5, after the time t4, the initial conditions were restored again, whereby the temperature of the mixed water at the outlet 15 of the mixing valve returned to acceptable values.

Thus, on the basis of the attained tests, it can be concluded that the new thermostatic mixing valve, as a consequence of the combination of the piston 14 for controlling the flows, and the conformation of the conveyor 21, enables an increased turbulence effect of the water streams and a consequent double mixing action, by maintaining a proper operative condition of the mixing valve as the working conditions change, said proper operative conditions of the mixing valve being capable of maintaining the temperature of the mixed water at a substantially constant value, and a prolonged contact time without dangerous fluctuations.

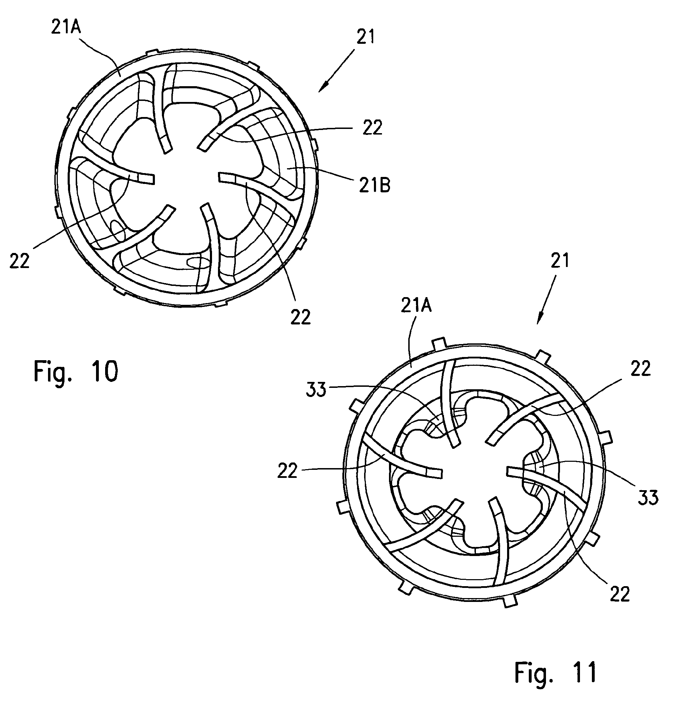

Figures 10 and 11 refer to a top view of a second and respectively to a third embodiment of the conveyor according to the invention, both comprising differently shaped lobed apertures and a plurality of arch-shaped wings 22 mutually curved in a same direction, converging from the peripheral wall 21A to the central axis of the flow conveyor 21.

## Claims

1. A thermostatic mixing valve comprising:
a valve body (10) having a first fluid inlet (11), a second fluid inlet (12) axially spaced apart from the first fluid inlet (11), and a flow path having a mixed fluid outlet (15);
a flow regulator (14) arranged in the valve body (10) for a movement between seatings at the first and the second fluid inlets (11, 12) in response to expansions and contractions of a thermostatic actuator (20) operatively connected to the flow regulator (14), said thermostatic actuator (20) axially extending into a flow conveyor (21) along the flow path, between a pre-mixing chamber (13) downstream the flow regulator (14) and the mixed fluid outlet (15);
the flow conveyor (21) comprising an enlarged annular wall (21 A) at the rear end, a fore tubular portion (21C) axially extending along said thermostatic actuator (20);
**characterised in that** the flow conveyor (21) comprises:
a plurality of angularly spaced apart and arch-shaped internal wings (22) to provide a first set of parallely arranged flow paths having lobed apertures and extending from a rear peripheral wall (21 A) to a first length of the fore tubular portion (21 C) of the conveyor (21), said first set of flow paths as a whole having a first constant cross-sectional area; and
a second flow path extending for the remaining length of the tubular portion (21 C) of the flow conveyor (21), downstream the internal wings (22), said second flow path being conformed with a cross-sectional area greater than the cross-sectional area of the first set of flow paths.

2. The thermostatic mixing valve according to claim 1, **characterised in that** the flow regulator (14) comprises a hollow control piston (14) having a plurality of flow sectors, each provided with a through hole (3a) for the passage of a water flow, the number of the flow paths in the conveyor (21) being different from the number of the flow sectors of the control piston (14).

3. The thermostatic mixing valve according to claim 2, **characterised in that** the through holes (30) in the control piston (14) are arranged near to a central hub (14A).

4. The thermostatic mixing valve according to anyone of the preceding claims, **characterised in that** the control piston (14) comprises an internal cylindrical surface having a first curvature radius R1, and wherein the centres of the through holes (30) for the passage of the water lie on a circle having a radius R2, the ratio R1/R2 ranging between 1,30 and 1,60.

5. The thermostatic mixing valve according to claim 2, **characterised in that** the control piston (14) is partitioned into a number of flow sectors by the internal partitioning fins (31), each flow sector of the piston (14) comprises a bottom wall having a surface area AS; while the through hole (30) for the passage of the streams of water comprises a surface area AF, the ratio AS/AF ranging between 3 and 3,5.

6. The thermostatic mixing valve according to one or more of the preceding claims, **characterised in that** said plurality of arch-shaped internal wings (22) comprises pairs of mutually spatially opposed wings (22A, 22B), converging from the peripheral wall (21A) to the central axis of the conveyor (21).

7. The thermostatic mixing valve according to one or more of claims 1 to 5, **characterised in that** all the wings (22) of said plurality of arch-shaped internal wings (22) are mutually curved in a same direction and are converging from the peripheral wall (21 A) to the central axis of the conveyor 21.

## Patentansprüche

1. Thermostat-Mischventil, das Folgendes umfasst:
einen Ventilkörper (10) mit einem ersten Fluideinlass (11), einem von dem ersten Fluideinlass (11) axial beabstandeten zweiten Fluideinlass (12) und einen Flusspfad mit einem Mischfluidauslass (15);
einen Flussregler (14), der für eine Bewegung zwischen Sitzflächen an dem ersten und dem zweiten Fluideinlass (11, 12) als Reaktion auf Ausdehnungen und Schrumpfungen eines wirksam mit dem Flussregler (14) verbundenen thermostatischen Betätigungselements (20) in dem Ventilkörper (10) angeordnet ist, wobei sich das thermostatische Betätigungselement (20) axial in eine Flussleitung (21) entlang dem Flusspfad, zwischen einer Vormischkammer (13) stromabwärts von dem Flussregler (14) und dem Mischfluidauslass (15) erstreckt;
wobei die Flussleitung (21) eine vergrößerte ringförmige Wand (21A) am hinteren Ende umfasst, wobei sich ein vorderer röhrenförmiger Abschnitt (21 C) axial entlang dem thermostatischen Betätigungselement (20) erstreckt;
**dadurch gekennzeichnet, dass** die Flussleitung (21) Folgendes umfasst:
mehrere winkelig voneinander beabstandete und bogenförmige innenliegende Flügel (22), um einen ersten Satz parallel angeordneter Flusspfade vorzusehen, die gelappte Öffnungen aufweisen und sich von einer hinteren Umfangswand (21A) bis zu einer ersten Länge des vorderen röhrenförmigen Abschnitts (21 C) der Leitung (21) erstrecken, wobei der erste Satz von Flusspfaden als Ganzes eine erste konstante Querschnittsfläche aufweist; und
einen zweiten Flusspfad, der sich über die verbleibende Länge des röhrenförmigen Abschnitts (21 C) der Flussleitung (21), stromabwärts von den innenliegenden Flügeln (22) erstreckt, wobei der zweite Flusspfad mit einer Querschnittsfläche angepasst ist, die größer ist als die Querschnittsfläche des ersten Satzes von Flusspfaden.

2. Thermostat-Mischventil nach Anspruch 1, **dadurch gekennzeichnet, dass** der Flussregler (14) einen hohlen Steuerkolben (14) mit mehreren Flusssektoren umfasst, die jeweils mit einem Durchgangsloch (3a) für das Durchfließen eines Wasserflusses versehen sind, wobei die Zahl der Flusspfade in der Leitung (21) von der Zahl der Flusssektoren des Steuerkolbens (14) verschieden ist.

3. Thermostat-Mischventil nach Anspruch 2, **dadurch gekennzeichnet, dass** die Durchgangslöcher (30) in dem Steuerkolben (14) in der Nähe von einem mittleren Mittelpunkt (14A) angeordnet sind.

4. Thermostat-Mischventil nach einem der vorangehenden Ansprüche, **dadurch gekennzeichnet, dass** der Steuerkolben (14) eine innenliegende zylindrische Oberfläche mit einem ersten Krümmungsradius R1 umfasst und wobei die Mitten der Durchgangslöcher (30) für das Durchfließen des Wassers auf einem Kreis mit einem Radius R2 liegen, wobei das Verhältnis R1/R2 im Bereich zwischen 1,30 und 1,60 liegt.

5. Thermostat-Mischventil nach Anspruch 2, **dadurch gekennzeichnet, dass** der Steuerkolben (14) durch die innenliegenden Unterteilungsrippen (31) in eine Zahl von Flusssektoren unterteilt ist, wobei die Flusssektoren des Kolbens (14) jeweils eine untere Wand mit einem Flächeninhalt AS aufweisen; während das Durchgangsloch (30) für das Durchfließen der Ströme von Wasser einen Flächeninhalt AF umfasst, wobei das Verhältnis AS/AF im Bereich zwischen 3 und 3,5 liegt.

6. Thermostat-Mischventil nach einem oder mehreren der vorangehenden Ansprüche, **dadurch gekennzeichnet, dass** die mehreren bogenförmigen innenliegenden Flügel (22) Paare von räumlich einander gegenüberliegenden Flügeln (22A, 22B) umfassen, die von der Umfangswand (21A) zur mittleren Achse der Leitung (21) zusammenlaufen.

7. Thermostat-Mischventil nach einem oder mehreren der Ansprüche 1 bis 5, **dadurch gekennzeichnet, dass** alle Flügel (22) der mehreren bogenförmigen innenliegenden Flügel (22) gemeinsam in einer gleichen Richtung gekrümmt sind und von der Umfangswand (21A) zur mittleren Achse der Leitung 21 zusammenlaufen.

## Revendications

1. Vanne de mélange thermostatique comprenant :
un corps de vanne (10) ayant une première entrée de fluide (11), une seconde entrée de fluide (12) espacée axialement de la première entrée de fluide (11) et un trajet d'écoulement ayant une sortie de fluide mixte (15) ;
un régulateur d'écoulement (14) aménagé dans le corps de vanne (10) pour un déplacement entre des sièges à la première et à la seconde entrée de fluide (11, 12) en réponse à des expansions et à d e s c o n t r a c t i o n s d'un actionneur thermostatique (20) raccordé en service au régulateur d'écoulement (14), ledit actionneur thermostatique (20) s'étendant axialement dans un convoyeur d'écoulement (21) le long du trajet d'écoulement, entre une chambre de pré-mélange (13) en aval du régulateur d'écoulement (14) et la sortie de fluide mixte (15) ;
le convoyeur d'écoulement (21) comprenant une paroi annulaire agrandie (21A) à l'extrémité arrière, une portion tubulaire avant (21C) s'étendant axialement le long dudit actionneur thermostatique (20) ;
**caractérisée en ce que** le convoyeur d'écoulement (21) comprend :
une pluralité d'ailes internes espacées l'une de l'autre d'un certain angle et en forme d'arc (22) pour fournir un premier jeu de trajets d'écoulement aménagés en parallèle, ayant des ouvertures en forme de lobe et s'étendant d'une paroi périphérique arrière (21A) à une première longueur de la portion tubulaire avant (21C) du convoyeur (21), ledit premier jeu de trajets d'écoulement ayant dans son ensemble une première surface en coupe transversale constante ; et
un second trajet d'écoulement s'étendant sur la longueur restante de la portion tubulaire (21C) du convoyeur d'écoulement (21) en aval des ailes internes (22), ledit second trajet d'écoulement étant conformé avec une surface en coupe transversale supérieure à la surface en coupe transversale du premier jeu de trajets d'écoulement.

2. Vanne de mélange thermostatique selon la revendication 1, **caractérisée en ce que** le régulateur d'écoulement (14) comprend un piston de commande creux (14) ayant une pluralité de secteurs d'écoulement, chacun pourvu d'un trou traversant (3a) pour le passage d'un écoulement d'eau, le nombre des trajets d'écoulement du convoyeur (21) étant différent du nombre de secteurs d'écoulement du piston de commande (14).

3. Vanne de mélange thermostatique selon la revendication 2, **caractérisée en ce que** les trous traversants (30) du piston de commande (14) sont aménagés à proximité d'un moyeu central (14A).

4. Vanne de mélange thermostatique selon l'une quelconque des revendications précédentes, **caractérisée en ce que** le piston de commande (14) comprend une surface cylindrique interne ayant un premier rayon de courbure R1 et dans laquelle les centres des trous traversants (30) pour le passage de l'eau se trouvent sur un cercle ayant un rayon R2, le rapport R1/R2 se situant dans une plage comprise entre 1,30 et 1,60.

5. Vanne de mélange thermostatique selon la revendication 2, **caractérisée en ce que** le piston de commande (14) est positionné dans un certain nombre de secteurs d'écoulement par les ailettes de séparation internes (31), chaque secteur d'écoulement du piston (14) comprend une paroi de fond ayant une surface AS ; tandis que le trou traversant (30) pour le passage des courants d'eau comprend une surface AF, le rapport AS/AF se situant dans une plage comprise entre 3 et 3,5.

6. Vanne de mélange thermostatique selon une ou plusieurs des revendications précédentes, **caractérisée en ce que** ladite pluralité d'ailes internes en forme d'arc (22) comprennent des paires d'ailes mutuellement opposées au plan spatial (22A, 22B) convergeant de la paroi périphérique (21A) à l'axe central du convoyeur (21).

7. Vanne de mélange thermostatique selon une ou plusieurs des revendications 1 à 5, **caractérisée en ce que** toutes les ailes (22) de ladite pluralité d'ailes internes en forme d'arc (22) sont mutuellement incurvées dans le même sens et convergent de la paroi périphérique (21A) à l'axe central du convoyeur (21).
